# EUROPÄISCHE PATENTSCHRIFT

(11) **EP 3 095 676 B1**
(45) Veröffentlichungstag und Bekanntmachung des Hinweises auf die Patenterteilung: **10.04.2019**
(21) Anmeldenummer: 16166832.2
(22) Anmeldetag: 25.04.2016
(51) Int. Cl.: B62D 15/02, G01C 21/16, G08G 1/14, B60W 30/06, G05D 1/00, G05D 1/02, G08G 1/005, G01C 22/00, G08G 1/00

(54) **VERFAHREN ZUR NUTZERDEFINIERTEN BEREITSTELLUNG EINES FAHRZEUGS**
METHOD FOR USER-DEFINED PROVISION OF A VEHICLE
PROCEDE DE MISE A DISPOSITION D'UN VEHICULE DEFINI PAR L'UTILISATEUR

(30) Priorität: 20.05.2015 DE 102015209190
(43) Veröffentlichungstag der Anmeldung: 23.11.2016
(73) Patentinhaber: Volkswagen Aktiengesellschaft, 38440 Wolfsburg (DE)
(72) Erfinder: Büschenfeld, Torsten, 31311 Uetze (DE); Max, Stephan, 38518 Gifhorn (DE); Urban, Alexander, 38518 Gifhorn (DE); Brosig, Stefan, 29386 Hankensbüttel (DE); Katzwinkel, Reiner, 38527 Meine (DE)

(56) Entgegenhaltungen:
- EP-A2- 2 008 915
- WO-A1-2006/092370
- DE-A1- 10 331 948
- DE-A1-102013 215 960
- DE-A1-102013 222 071

## Beschreibung

Die Erfindung betrifft ein Verfahren zur nutzerdefinierten Bereitstellung eines Fahrzeugs.

Ein langfristiger Trend im Bereich der Mobilität sind autonom fahrende Fahrzeuge. Durch Fahrzeuge, die nicht mehr auf eine Steuerung durch einen Menschen angewiesen sind, lässt sich neben der Sicherheit und Effizienz von Verkehrssystemen auch deren Flexibilität erhöhen. Dies geschieht beispielsweise bei Kraftfahrzeugen, indem ein Nutzer des Kraftfahrzeugs dieses an einem beliebigen Ort verlässt, dieses selbstständig eine Parkposition anfährt und der Nutzer das Kraftfahrzeug zur weiteren Nutzung von einem anderen Ort aus anfordert. Eine besondere Bedeutung kommt dabei der Ermittlung der relativen Position des Kraftfahrzeugs und des Nutzers zu. Im Stand der Technik existieren dazu zwei grundlegende Ansätze.

Eine Möglichkeit besteht in einer Messung der absoluten Position des Kraftfahrzeugs und des Nutzers. Der Nutzer kann seine Position auch an das Kraftfahrzeug übertragen, beispielsweise über eine Funkverbindung. Nachteilig an diesen Verfahren ist jedoch, dass eine Ortung des Nutzers durch das Kraftfahrzeug oder umgekehrt durch eingeschränkte Datenübertragungswege, beispielsweise infolge von überbauten Parkflächen oder Gebäudestörkonturen erschwert wird. Als besonders schwierig erweist sich die Ortung des Nutzers durch das Kraftfahrzeug. Verfügbare Methoden wie GPS, Funkübertragung oder optische Messmethoden stoßen schnell an die Grenzen ihrer Genauigkeit. Insbesondere bei einer fehlenden Sichtverbindung zwischen Nutzer und Kraftfahrzeug erweist sich eine Identifizierung des Nutzers als problematisch.

Ferner besteht eine Möglichkeit darin, im Vorfeld eine Übergabezone für das Kraftfahrzeug zur weiteren Nutzung zu definieren. Der Nutzer kann das Kraftfahrzeug dann in die Übergabezone anfordern. Nachteilig an diesem Verfahren ist jedoch, dass die Flexibilität hinsichtlich des Ortes für die Weiternutzung beschränkt ist. Auch eine potentielle Nicht-Verfügbarkeit der vereinbarten Übergabezone, beispielsweise in Folge einer Belegung, stellt sich als problematisch dar.

WO 2006/092370 A1 ist als nächstliegender Stand der Technik nach dem Oberbegriff des Anspruchs 1 zu sehen und beschreibt ein Verfahren, in dem ein Fahrer ein Fahrzeug zunächst selbst an eine gewünschte Position in einer Parklücke fährt. Anschließend fährt er das Fahrzeug eigenhändig aus der Parklücke heraus und verlässt anschließend das Fahrzeug. Erst dann wird das Fahrzeug automatisch entlang der gerade befahrenen Wegstrecke zurück auf die Parkposition geführt.

In der EP 2 008 915 A2 ist eine Vorrichtung zur semiautonomen Unterstützung der Lenkbewegung eines Fahrzeugs beschrieben. Dabei soll durch eine Lernfahrt eine Soll-Bahn für eine definierte Umgebung erlernt werden, anhand derer der Fahrer beim Führen des Fahrzeugs später unterstützt werden kann.

DE 103 31 948 A1 beschreibt weiterhin ein Verfahren zur Unterstützung des Manövrierens von Fahrzeugen. Dabei wird ein durchzuführendes Manöver des Fahrzeugs mit einer Aufnahmeeinheit aufgenommen und in einer Speichereinheit gespeichert, und dann mit einer Unterstützungseinheit zur wiederholten Durchführung des Manövers unterstützt.

Weiterhin offenbart DE 10 2013 222071 A1 ein Parkraumverwaltungssystem, das ausgebildet ist, einerseits mit einem Fahrzeug zu kommunizieren und andererseits mit einem Mobilgerät eines Fahrzeugnutzers zu kommunizieren. Das Parkraumverwaltungssystem verwendet eine Recheneinheit, um einen optimierten Startzeitpunkt für das Einleiten eines Ausparkvorgangs in Abhängigkeit von einer vorgegebenen Abholzeit zu berechnen.

Schließlich beschreibt DE 10 2013 215960 A1 ein Verfahren zur Positionsbestimmung eines Fahrzeugs. Bewegungsinformationen des Fahrzeugs werden dabei erfasst und zur Ermittlung einer Stockwerksinformation einer Parkebene verwertet.

Der Erfindung liegt nun die Aufgabe zugrunde, ein Verfahren zur nutzerdefinierten Bereitstellung eines Fahrzeugs bereitzustellen, das ohne eine absolute Messung des Standortes des Kraftfahrzeugs oder des Nutzers auskommt.

Die gestellte Aufgabe wird durch den Gegenstand des Patentanspruchs 1 gelöst. Demnach betrifft die vorliegende Erfindung ein Verfahren zur nutzerdefinierten Bereitstellung eines Fahrzeugs, in dem durch das Fahrzeug selbstständig oder durch einen Nutzer geführt eine Parkposition in einer Parkregion identifiziert und angefahren wird und das Fahrzeug auf Anforderung des Nutzer automatisch zur weiteren Nutzung an einen Übergabeort in der Parkregion fährt, wobei eine innerhalb der Parkregion bis zur Parkposition zurückgelegte Trajektorie gespeichert wird und der Übergabeort an einem beliebigen Punkt auf dieser Trajektorie definierbar ist.

Ein erster Aspekt der vorliegenden Erfindung besteht in einem Verfahren zur nutzerdefinierten Bereitstellung eines Fahrzeugs, in dem durch das Fahrzeug , von einem Ausstiegspunkt eines Nutzers in einer Parkregion an, selbstständig eine Parkposition in einer der Parkregion identifiziert und angefahren wird und das Fahrzeug auf Anforderung des Nutzers automatisch zur weiteren Nutzung an einen Übergabeort in der Parkregion fährt, wobei eine innerhalb der Parkregion bis zur Parkposition zurückgelegte Trajektorie gespeichert wird und der Übergabeort an einem beliebigen Punkt auf dieser Trajektorie definierbar ist. Erfindungsgemäß ist vorgesehen, dass die Lage des Ausstiegspunkts auf der Trajektorie gespeichert wird, das Fahrzeug über eine Kommunikationseinrichtung mit einer mobilen Kommunikationseinrichtung des Nutzers kommuniziert und dabei die Trajektorie zusammen mit dem Ausstiegspunkt zumindest einmalig an den Nutzer übermittelt und weiterhin die Trajektorie zusammen mit dem Ausstiegspunkt dem Nutzer auf dessen mobiler Kommunikationseinrichtung angezeigt werden.

Dies bietet den Vorteil, dass eine absolute Messung der Position des Fahrzeugs innerhalb der Parkregion nicht mehr erforderlich ist und eine absolute Messung der Position des Nutzers vollständig entfallen kann. Da die Parkregion bekannt ist und die Trajektorie des Fahrzeugs bekannt ist, lässt sich der Standort des Fahrzeugs innerhalb der Parkregion rekonstruieren. Das Fahrzeug kann dann an einen definierten Punkt innerhalb der Parkregion geschickt werden, der bereits wenigstens einmal angefahren worden ist. Eine Kenntnis des Standortes des Nutzers ist daher nicht mehr erforderlich.

Nochmals verdeutlicht bietet dies den Vorteil, dass ein definierter Referenzpunkt vorhanden ist, der dem Nutzer in jedem Fall bekannt ist und
dem Nutzer, nach dessen Verlassen des Fahrzeugs, die vollständige Trajektorie zur Verfügung steht, um das Fahrzeug zu bestellen. Bezogen auf den Ausstiegspunkt des Nutzers lässt sich so der Standort des Fahrzeugs vorteilhaft ohne Messung verständlich für den Nutzer beschreiben.

Eine Trajektorie beinhaltet Positionsdaten und Zeitdaten die miteinander in Verbindung stehen. Die Positionsdaten beschreiben in ihrer Abfolge einen Pfad. Eine Darstellung des Pfades reicht aus, um einen Übergabeort für das Fahrzeug zu definieren. Die Positionsdaten, die dem Pfad zugrunde liegen, werden nicht gemessen. Sie werden rekonstruiert, beispielsweise aus Fahrzeugdaten wie einer Winkelposition der Räder bezogen auf die Zeit. Somit liegen hinsichtlich der Speicherung alle Merkmale einer Trajektorie vor. Im Zusammenhang mit der vorliegenden Erfindung wird von einer Trajektorie gesprochen, auch wenn für das Verfahren teilweise nur der Pfad von direktem Belang ist. Als Parkregion kommen grundsätzlich alle bekannten Parkregionen wie beispielsweise öffentliche Straßenbereiche, Parkanlagen oder private Grundstücke und Gebäude in Betracht.

Die Erfindung sieht vor, dass der Nutzer über die mobile Kommunikationseinrichtung eine Anforderung zur weiteren Nutzung an das Fahrzeug übermittelt und das Fahrzeug dadurch aktiviert wird. Vorteilhafterweise kann das Fahrzeug in der Zwischenzeit deaktiviert sein oder in einem energiesparenden Modus verweilen. Weiterhin vorteilhaft kann der Nutzer die Anforderung zeitlich und örtlich flexibel an das Fahrzeug übertragen.

Wie oben bereits erwähnt, wird beim Verfahren der vorliegenden Erfindung die Lage des Ausstiegspunkts des Nutzers auf der Trajektorie gespeichert und das Fahrzeug kommuniziert über die Kommunikationseinrichtung mit der mobilen Kommunikationseinrichtung des Nutzers und übermittelt dabei die Trajektorie zumindest einmalig.

In bevorzugter Ausgestaltung der Erfindung ist vorgesehen, dass für die Speicherung der Trajektorie Mittel des Fahrzeugs zur Messung einer horizontalen und vertikalen Fahrtrichtung, einer Geschwindigkeit und einer Zeit sowie eine Datenspeicher- und Verarbeitungseinrichtung des Fahrzeugs verwendet werden. Dies bietet den Vorteil, die Speicherung der Trajektorie besonders einfach erfolgt und alle benötigten Daten für eine vollständige Trajektorie auf einfache Weise erfasst werden. Es können zum Beispiel eine Lenkradstellung, eine Raddrehwinkelstellung, die Zeit, eine horizontale Neigung des Fahrzeugs sowie eine Ausrichtung des Fahrzeugs in einer horizontalen Ebene gemessen werden. Aus Raddrehwinkelstellung und der Zeit kann die Drehzahl der Räder beziehungsweise die Geschwindigkeit des Fahrzeugs ermittelt werden. Aus der Lenkradstellung und der Geschwindigkeit kann beispielsweise ein dynamischer Geschwindigkeitsvektor bestimmt werden. Durch Auswertung des dynamischen Geschwindigkeitsvektors über die Zeit kann die zurückgelegte Trajektorie dargestellt werden. Ein Startpunkt für die Zeitmessung kann dabei zum Beispiel durch erstmaligen Eintritt in die Parkregion definiert werden. Ein Endpunkt für die Zeitmessung kann beispielsweise durch Erreichen der Parkposition definiert werden. Eine Auswertung der Ausrichtung in einer horizontalen Ebene kann beispielsweise zur Korrektur von Schlupfeffekten an den Reifen verwendet werden. Somit werden Fehler in Folge einer Abweichung von Räderdrehzahl und Fahrzeuggeschwindigkeitsvektor vorteilhaft vermieden. Die Ausrichtung in der horizontalen Ebene kann beispielsweise mit einem Kompass gemessen werden. Eine Auswertung der horizontalen Neigung kann beispielsweise zur Korrektur der Trajektorie bei unebenen Untergründen oder mehrstöckigen Parkanlagen verwendet werden. So werden mögliche Fehler in Folge eines rein zweidimensionalen Fahrzeuggeschwindigkeitsvektors vorteilhaft vermieden. Beispielsweise kann dem Fahrzeuggeschwindigkeitsvektor eine weitere Dimension hinzugefügt werden und eine dreidimensionale Trajektorie gespeichert werden.

In weiterer bevorzugter Ausgestaltung der Erfindung ist vorgesehen, dass der Nutzer über die mobile Kommunikationseinrichtung den Übergabeort für das Fahrzeug übermittelt oder das Fahrzeug manuell vorwärts oder rückwärts auf der Trajektorie steuert. Dies bietet den Vorteil, dass der Übergabeort sehr flexibel bestimmbar ist und auch nachträglich veränderbar ist.

In weiterer bevorzugter Ausgestaltung der Erfindung ist vorgesehen, dass die Trajektorie auf der mobilen Kommunikationseinrichtung mit Umgebungsinformationen überlagert dargestellt wird. Dies bietet den Vorteil, dass der Nutzer den Übergabeort im Kontext zu einer Umgebung definieren kann, beziehungsweise den Standort des Fahrzeugs in diesem Kontext kennt. Beispielsweise kann elektronisch oder online verfügbares Kartenmaterial verwendet werden. Beispielsweise kann anhand zweier Punkte eine Ausrichtung der Trajektorie zu dem Kartenmaterial erfolgen. Hierfür kommen bevorzugt der Eintrittspunkt in die Parkregion und der Ausstiegspunkt des Nutzers in Betracht. Diese Methode ist vorteilhaft einfach, wenn beide Punkte beispielsweise über ein Navigationssystem erfassbar sind. Eine Ausrichtung kann beispielsweise auch anhand eines Punkts und einer Gradzahl zur Ausrichtung des Fahrzeugs in der horizontalen Ebene erfolgen. Dies ist vorteilhaft, wenn eine beispielsweise GPS-Bestimmung nur eines Punkts möglich ist und die Nicht-Verfügbarkeit für den zweiten Punkt durch Daten des Kompasses kompensiert werden kann.

In weiterer bevorzugter Ausgestaltung der Erfindung ist vorgesehen, dass wenigstens die Trajektorie an einen weiteren Nutzer übermittelt wird und der weitere Nutzer den Übergabeort definiert. Dies bietet den Vorteil, dass das die Flexibilität des Verfahrens erhöht wird. Vorteilhafterweise kann die weitere Nutzung des Fahrzeugs durch einen anderen Nutzer erfolgen, als durch den Nutzer, der das Fahrzeug zum Parken abgestellt hat. Mit Vorteil lassen sich so beispielsweise Carsharingmodelle realisieren. Die Trajektorie kann rein beispielhaft auf einem Server gespeichert werden und von dem Nutzer, der das Fahrzeug weiternutzen möchte, abgerufen werden.

Ein weiterer Aspekt der vorliegenden Erfindung betrifft ein System für ein Fahrzeug, das zumindest Mittel zur Kommunikation mit fahrzeugexternen Geräten, Aktoren zur automatisierten Betätigung von Stellgliedern des Fahrzeugs, Sensorik zur Erfassung von Umgebungs- und Fahrzeuginformationen, ein Steuerungs- und Regelungssystem zur Speicherung und Verarbeitung von Kommunikations-, Fahrzeug- und Umgebungsinformationen sowie zur Erzeugung von Stellsignalen für die Aktoren aufweist. Erfindungsgemäß ist das System eingerichtet, ein erfindungsgemäßes Verfahren zur nutzerdefinierten Bereitstellung eines Fahrzeugs durchzuführen.

Dies bietet den Vorteil, dass Systemelemente verwendet werden, die in modernen Fahrzeugen bereits bekannt sind. Durch Implementierung einer verfahrensspezifischen Software in beispielsweise dem Steuerungssystem kann das System für das erfindungsgemäße Verfahren konfiguriert werden.

Ein weiterer Aspekt der vorliegenden Erfindung betrifft ein Kraftfahrzeug, das ein erfindungsgemäßes System zur Durchführung des erfindungsgemäßen Verfahrens aufweist. Dies bietet den Vorteil, dass das Kraftfahrzeug flexibler wird.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines erfindungsgemäßen Verfahrens zur nutzerdefinierten Bereitstellung eines Fahrzeugs in einer bevorzugten Ausführungsform und
- Figur 2: ein erfindungsgemäßes Kraftfahrzeug mit einem erfindungsgemäßen System zur Durchführung eines erfindungsgemäßen Verfahrens zur nutzerdefinierten Bereitstellung eines Fahrzeugs in einer bevorzugten Ausführungsform.

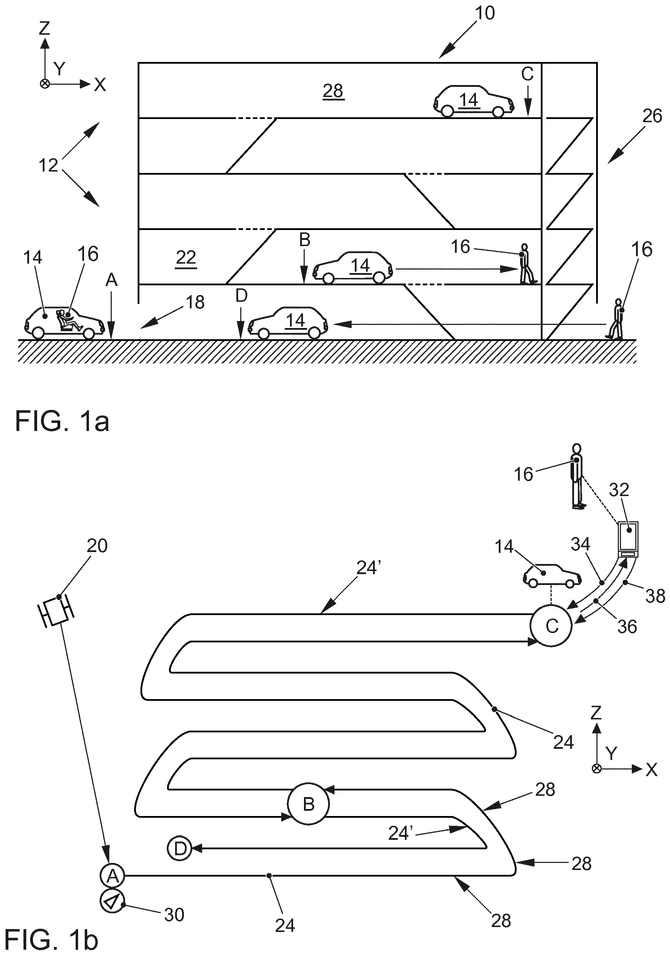

Figur 1 zeigt eine schematische Darstellung eines erfindungsgemäßen Verfahrens zur nutzerdefinierten Bereitstellung eines Fahrzeugs in einer bevorzugten Ausführungsform. Figur 1a beschreibt das Verfahren auf einer gegenständlichen Ebene und Figur 1b beschreibt analog dazu das Verfahren im Sinne von Informationsflüssen und Steuerungsprozessen. Die verwendeten Bezugszeichen entsprechen dabei gleichen Merkmalen. Gezeigt ist ein Parkhaus 10 mit fünf Parkebenen 12. Ein Kraftfahrzeug 14 mit einem Nutzer 16 fährt einen Eingangsbereich 18 des Parkhauses 10 an. Der Eingangsbereich 18 definiert einen Anfangspunkt A, der einen Eintritt in eine Parkregion markiert. Der Anfangspunkt A wird einer Trajektorie 24 des Kraftfahrzeugs auf einem Weg durch die Parkregion zugeordnet. Der Anfangspunkt A wird mittels eines GPS-Systems 20 bestimmt, das mit einem Navigationssystem des Kraftfahrzeugs 14 kommuniziert. Eine Ausrichtung des Kraftfahrzeugs 14 in einer horizontalen Ebene 30 wird in dem Anfangspunkt A durch einen Kompass bestimmt. Der Nutzer 16 fährt das Kraftfahrzeug 14 bis auf eine erste Parkebene 22 und steigt dort an einem Ausstiegspunkt B aus. In dem Parkhaus 10 ist eine Kommunikation mit dem GPS-System 20 nicht möglich. Die Trajektorie 24 des Kraftfahrzeugs 14 bis zum Ausstiegspunkt B wird erstellt und gespeichert, indem eine Lenkradstellung, eine Räderdrehzahl und eine vertikale Neigung sowie eine Ausrichtung in der horizontalen Ebene 30 des Kraftfahrzeugs 14 kontinuierlich gemessen wird. Die Trajektorie 24 kann in Form der Positionsdaten über der Zeit mittels verbundener unterschiedlich langer und in unterschiedlichen Richtungen verlaufenden Linien 28 dargestellt werden. Ein Zentimeter einer Linie kann beispielsweise einer realen Strecke von zwei Metern zwischen zwei Positionen entsprechen. Der Nutzer 16 verlässt das Parkhaus 10 über ein Treppenhaus 26. Das Kraftfahrzeug 14 setzt seine Fahrt nun autonom in dem Parkhaus 10 fort und sucht eine verfügbare Parkposition. Es fährt auf eine vierte Parkebene 29 und identifiziert eine Parkposition C. Das Kraftfahrzeug 14 fährt die Parkposition C an und wartet dort in einem Ruhezustand. Nach einer längeren Wartezeit sendet der Nutzer 16 über ein Smartphone 32 eine Anforderung 34 zur weiteren Nutzung an das Kraftfahrzeug 14. Hierdurch wird das Kraftfahrzeug 14 auf der Parkposition C aktiviert. Das Kraftfahrzeug 14 sendet die gefahrene Trajektorie 24 als aufbereiteten Datensatz 36 an das Smartphone 32. Der aufbereitete Datensatz 36 enthält die Positionsdaten, den Anfangspunkt A und den Ausstiegspunkt B sowie die Ausrichtung des Kraftfahrzeugs 14 in einer horizontalen Ebene 30 am Anfangspunkt A. Der Nutzer 16 lässt sich die Trajektorie 24 überlagert mit einer Darstellung des Parkhauses 10 auf dem Smartphone 32 anzeigen. Der Anfangspunkt A, dessen Position absolut durch das GPS-System 20 ermittelt worden ist, wird in Verbindung mit der Ausrichtung des Kraftfahrzeugs 14 in der horizontalen Ebene 30 am Anfangspunkt A verwendet, um die Trajektorie 24 relativ zu der Darstellung des Parkhauses 10 zu orientieren. Der Nutzer 16 aktiviert eine Übermittlung 38 eines durch ihn definierten Übergabeortes D an das an der Parkposition C befindliche Kraftfahrzeug 14. Der Übergabeort D ist ein ausgewählter Punkt der Trajektorie 24. Das Kraftfahrzeug 14 fährt dann autonom zum Übergabeort D, indem es die Trajektorie in umgekehrter Reihenfolge 24' abfährt. Mit anderen Worten, das Kraftfahrzeug 14 fährt unterschiedliche Positionen der Trajektorie 24 in umgekehrter Reihenfolge wie auf einem Hinweg ab. Am Übergabeort D nimmt der Nutzer 16 das Kraftfahrzeug 14 wieder in Besitz zur weiteren Nutzung. Analog zu diesem Ausführungsbeispiel lässt sich das Verfahren auf beliebige Parkregionen übertragen. Ist die Parkregion rein exemplarisch ein öffentliches Straßengelände, so würde anstelle einer Darstellung des Parkhauses ein elektronisches Kartenmaterial des Straßengeländes verwendet werden.

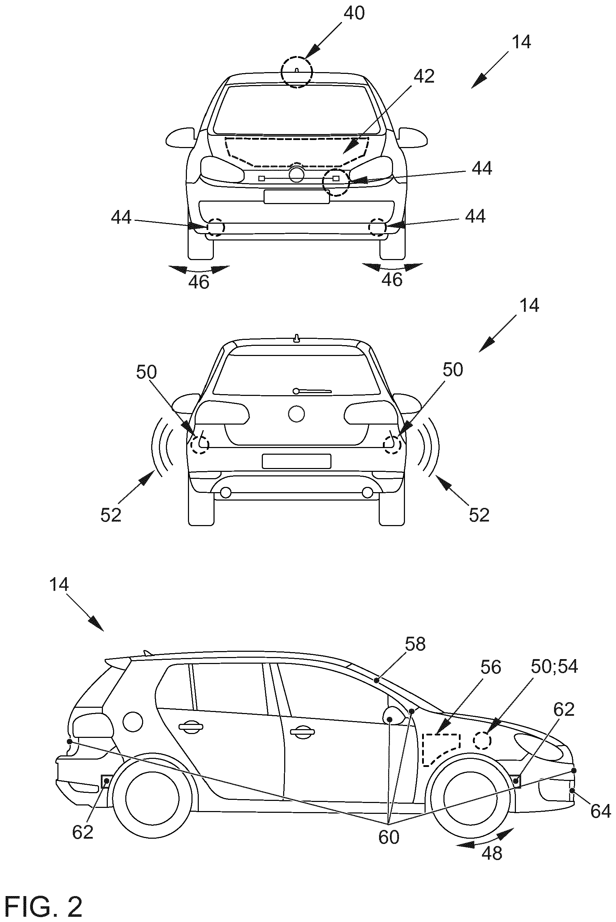

Figur 2 zeigt ein erfindungsgemäßes Kraftfahrzeug mit einem erfindungsgemäßen System zur Durchführung eines erfindungsgemäßen Verfahrens zur nutzerdefinierten Bereitstellung eines Fahrzeugs in einer bevorzugten Ausführungsform. Es werden dieselben Bezugszeichen wie in Figur 1 verwendet, sofern gleiche Merkmale bezeichnet werden. In diesen Fällen gilt das in Figur 1 beschriebene auch für die gleichen Merkmale in Figur 2. Der obere Teil der Figur 2 zeigt eine Frontansicht, der mittlere Teil eine Rückansicht und der untere Teil eine Seitenansicht des Kraftfahrzeugs 14. Das Kraftfahrzeug 14 weist in diesem Ausführungsbeispiel eine Antenne 40 zur Kommunikation mit fahrzeugexternen Geräten auf, beispielsweise zur Kommunikation mit einem mobilen Gerät eines Fahrers oder auch zur Kommunikation mit einem GPS-System zur Positionsbestimmung. Weitere Mittel zur Kommunikation sind in Form von Eingabe- und Ausgabeelementen 42 vorgesehen, die im Bereich einer Armaturenbretts lokalisiert sind. Das Kraftfahrzeug 14 weist eine Vielzahl von Aktoren 44 zur automatisierten Betätigung von Stellgliedern des Fahrzeugs auf. Diese können rein beispielhaft eine Räderstellung 46 oder eine Räderdrehzahl 48 beeinflussen. Ferner verfügt das Kraftfahrzeug 14 über Sensorik zur Erfassung von Umgebungs- und Fahrzeuginformationen 50. Die Sensorik 50 kann rein beispielhaft Abstandssensoren zur Erfassung umliegender Objekte beinhalten. Es können auch Neigungssensoren 54 in dem Kraftfahrzeug 14 integriert sein. Das Kraftfahrzeug 14 weist zudem ein Steuerungs- und Regelungssystem 56 zur Speicherung und Verarbeitung von Kommunikations-, Fahrzeug- und Umgebungsinformationen sowie zur Erzeugung von Stellsignalen für die Aktoren 44 auf. Im unteren Teil der Figur 2 sind exemplarisch einige Sensoren zur Erfassung von Umgebungs- und Fahrzeuginformationen 50 näher spezifiziert. Beispielsweise kann eine Frontkamera 58 zur Erfassung eines Fernfeldes des Kraftfahrzeugs 14 vorgesehen sein. Diese kann beispielsweise optische Wegmarken erkennen, die zur Erstellung der Trajektorie 24 verwendet werden können. Ferner kann ein Surround-Kamerasystem 60 vorgesehen sein, das beispielsweise ein Nahfeld des Kraftfahrzeugs 14 in allen Himmelsrichtungen erfassen kann. Ferner können Ultraschallsensoren 62 sowie ein Radarsystem 64 vorgesehen sein, um das Umfeld des Kraftfahrzeugs 14 zu erkennen.

### Bezugszeichenliste

- 10: Parkhaus
- 12: Parkebenen
- 14: Kraftfahrzeug
- 16: Nutzer
- 18: Eingangsbereich
- 20: GPS-System
- 22: erste Parkebene
- 24: Trajektorie
- 24': Trajektorie in umgekehrter Reihenfolge
- 26: Treppenhaus
- 28: verbundene unterschiedlich lange und in unterschiedlichen Richtungen verlaufende Linien
- 30: Ausrichtung in einer horizontalen Ebene
- 32: Smartphone
- 34: Anforderung
- 36: Datensatz
- 38: Übermittlung
- 40: Antenne
- 42: Eingabe- und Ausgabeelemente
- 44: Aktoren
- 46: Räderstellung
- 48: Räderdrehzahl
- 50: Sensorik zur Erfassung von Umgebungs- und Fahrzeuginformationen
- 52: Abstandssensoren zur Erfassung umliegender Objekte
- 54: Neigungssensoren
- 56: Steuerungs- und Regelungssystem
- 58: Frontkamera
- 60: Surround-Kamerasystem
- 62: Ultraschallsensoren
- 64: Radarsystem
- A: Anfangspunkt
- B: Ausstiegspunkt
- C: Parkposition
- D: Übergabeort

### Bezugszeichenliste

- 10: Parkhaus
- 12: Parkebenen
- 14: Kraftfahrzeug
- 16: Nutzer
- 18: Eingangsbereich
- 20: GPS-System
- 22: erste Parkebene
- 24: Trajektorie
- 24': Trajektorie in umgekehrter Reihenfolge
- 26: Treppenhaus
- 28: verbundene unterschiedlich lange und in unterschiedlichen Richtungen verlaufende Linien
- 30: Ausrichtung in einer horizontalen Ebene
- 32: Smartphone
- 34: Anforderung
- 36: Datensatz
- 38: Übermittlung
- 40: Antenne
- 42: Eingabe- und Ausgabeelemente
- 44: Aktoren
- 46: Räderstellung
- 48: Räderdrehzahl
- 50: Sensorik zur Erfassung von Umgebungs- und Fahrzeuginformationen
- 52: Abstandssensoren zur Erfassung umliegender Objekte
- 54: Neigungssensoren
- 56: Steuerungs- und Regelungssystem
- 58: Frontkamera
- 60: Surround-Kamerasystem
- 62: Ultraschallsensoren
- 64: Radarsystem
- A: Anfangspunkt
- B: Ausstiegspunkt
- C: Parkposition
- D: Übergabeort

## Patentansprüche

1. Verfahren zur nutzerdefinierten Bereitstellung eines Fahrzeugs, in dem das Fahrzeug, von einem Ausstiegspunkt (B) eines Nutzers (16) in einer Parkregion an, selbstständig eine Parkposition (C) in der Parkregion identifiziert und anfährt und das Fahrzeug auf Anforderung (34) des Nutzers (16) automatisch zur weiteren Nutzung an einen Übergabeort (D) in der Parkregion fährt, wobei eine innerhalb der Parkregion bis zur Parkposition (C) zurückgelegte Trajektorie (24) gespeichert wird und der Übergabeort (D) an einem beliebigen Punkt auf dieser Trajektorie (24) definierbar ist
**dadurch gekennzeichnet, dass**
die Lage des Ausstiegspunkts (B) auf der Trajektorie (24) gespeichert wird, das Fahrzeug über eine Kommunikationseinrichtung mit einer mobilen Kommunikationseinrichtung des Nutzers (16) kommuniziert und dabei die Trajektorie (24) zusammen mit dem Ausstiegspunkt (B) zumindest einmalig an den Nutzer (16) übermittelt und weiterhin die Trajektorie (24) zusammen mit dem Ausstiegspunkt (B) dem Nutzer (16) auf dessen mobiler Kommunikationseinrichtung angezeigt werden und der Nutzer (16) über die mobile Kommunikationseinrichtung die Anforderung (34) zur weiteren Nutzung an das Fahrzeug übermittelt und das Fahrzeug dadurch aktiviert wird.

2. Verfahren zur nutzerdefinierten Bereitstellung eines Fahrzeugs nach Anspruch 1, **dadurch gekennzeichnet, dass** für die Speicherung der Trajektorie (24) Mittel des Fahrzeugs zur Messung einer horizontalen und vertikalen Fahrtrichtung, einer Geschwindigkeit und einer Zeit sowie eine Datenspeicher- und Verarbeitungseinrichtung des Fahrzeugs verwendet werden.

3. Verfahren zur nutzerdefinierten Bereitstellung eines Fahrzeugs nach einem der Ansprüche 1 oder 2, **dadurch gekennzeichnet, dass** der Nutzer (16) über die mobile Kommunikationseinrichtung den Übergabeort (D) für das Fahrzeug übermittelt oder das Fahrzeug manuell vorwärts oder rückwärts auf der Trajektorie (24) steuert.

4. Verfahren zur nutzerdefinierten Bereitstellung eines Fahrzeugs nach einem der Ansprüche 1 bis 3, **dadurch gekennzeichnet, dass** die Trajektorie (24) auf der mobilen Kommunikationseinrichtung mit Umgebungsinformationen überlagert dargestellt wird.

5. Verfahren zur nutzerdefinierten Bereitstellung eines Fahrzeugs nach einem der Ansprüche 1 bis 4, **dadurch gekennzeichnet, dass** wenigstens die Trajektorie (24) an einen weiteren Nutzer übermittelt wird und der weitere Nutzer den Übergabeort (D) definiert.

6. System für ein Fahrzeug, ausweisend zumindest:
- Mittel zur Kommunikation mit fahrzeugexternen Geräten;
- Aktoren (44) zur automatisierten Betätigung von Stellgliedern des Fahrzeugs;
- Sensorik zur Erfassung von Umgebungs- und Fahrzeuginformationen (50);
- ein Steuerungs- und Regelungssystem (56) zur Speicherung und Verarbeitung von Kommunikations-, Fahrzeug- und Umgebungsinformationen sowie zur Erzeugung von Stellsignalen für die Aktoren (44), **dadurch gekennzeichnet, dass** das System eingerichtet ist, ein Verfahren nach einem der Ansprüche 1 bis 5 durchzuführen.

7. Kraftfahrzeug (14), dass ein System nach Anspruch 6 aufweist.

## Claims

1. Method for the user-defined provision of a vehicle in which the vehicle automatically identifies, starting from an exit point (B) of a user (16) in a parking region, a parking position (C) in the parking region and drives thereto, and at the request (34) of the user (16) the vehicle drives automatically to a transfer location (D) in the parking region for further use, wherein a trajectory (24) which is travelled along as far as the parking position (C) within the parking region is stored, and the transfer location (D) can be defined at any desired point on this trajectory (24) **characterized in that** the position of the exit point (B) on the trajectory (24) is stored, the vehicle communicates via a communication device with a mobile communication device of the user (16), and in doing so transmits the trajectory (24) together with the exit point (B) at least once to the user (16) and furthermore the trajectory (24) together with the exit point (B) are displayed to the user (16) on their mobile communication device and the user (16) transmits via the mobile communication device the request (34) for further use to the vehicle, and as a result activates the vehicle.

2. Method for the user-defined provision of a vehicle according to Claim 1, **characterized in that** means of the vehicle for measuring a horizontal and vertical direction of travel, a velocity and a time as well as a data storage device and processing device of the vehicle are used for the storage of the trajectory (24).

3. Method for the user-defined provision of a vehicle according to one of Claims 1 and 2, **characterized in that** the user (16) transmits the transfer location (D) for the vehicle via the mobile communication device, or steers the vehicle manually forwards or rearwards on the trajectory (24) .

4. Method for the user-defined provision of a vehicle according to one of Claims 1 to 3, **characterized in that** the trajectory (24) is illustrated on the mobile communication device with surroundings information superimposed thereon.

5. Method for the user-defined provision of a vehicle according to one of Claims 1 to 4, **characterized in that** at least the trajectory (24) is transmitted to a further user, and the further user defines the transfer location (D) .

6. System for a vehicle, having at least:
- means for communicating with vehicle-external apparatuses;
- actuators (44) for automatically activating actuator elements of the vehicle;
- a sensor system for acquiring surroundings information (50) and vehicle information (50);
- an open-loop and closed-loop control system (56) for storing and processing communication information, vehicle information and surroundings information and for generating actuation signals for the actuators (44), **characterized in that** the system is configured to carry out a method according to one of Claims 1 to 5.

7. Motor vehicle (14) which has a system according to Claim 6.

## Revendications

1. Procédé de mise à disposition définie par l'utilisateur d'un véhicule, dans lequel le véhicule, à partir d'un point de descente (B) d'un utilisateur (16) dans une région de stationnement, identifie automatiquement une position de stationnement (C) dans la région de stationnement et la gagne et le véhicule, sur demande (34) de l'utilisateur (16), se déplace automatiquement vers un lieu de remise (D) dans la région de stationnement en vue d'une poursuite de l'utilisation, une trajectoire (24) parcourue à l'intérieur de la région de stationnement jusqu'à la position de stationnement (C) étant mémorisée et le lieu de remise (D) pouvant être défini en un point quelconque sur cette trajectoire (24), **caractérisé en ce que**
la position du point de descente (B) sur la trajectoire (24) est mémorisée, le véhicule communique par le biais d'un dispositif de communication avec un dispositif de communication mobile de l'utilisateur (16) et communique ici la trajectoire (24) conjointement avec le point de descente (B) au moins une fois à l'utilisateur (16) et, de plus, la trajectoire (24) conjointement avec le point de descente (B) est affichée à l'attention de l'utilisateur (16) sur son dispositif de communication mobile et l'utilisateur (16), par le biais du dispositif de communication mobile, communique la demande (34) de poursuite de l'utilisation au véhicule et le véhicule est ainsi activé.

2. Procédé de mise à disposition définie par l'utilisateur d'un véhicule selon la revendication 1, **caractérisé en ce que** des moyens du véhicule servant à mesurer une direction de déplacement horizontale et verticale, une vitesse et une durée ainsi qu'un dispositif de mémorisation et de traitement de données du véhicule sont utilisés pour la mémorisation de la trajectoire (24).

3. Procédé de mise à disposition définie par l'utilisateur d'un véhicule selon l'une des revendications 1 ou 2, **caractérisé en ce que** l'utilisateur (16), par le biais du dispositif de communication mobile, communique le lieu de remise (D) pour le véhicule ou commande le véhicule manuellement en marche avant ou en marche arrière sur la trajectoire (24) .

4. Procédé de mise à disposition définie par l'utilisateur d'un véhicule selon l'une des revendications 1 à 3, **caractérisé en ce que** la trajectoire (24) est représentée sur le dispositif de communication mobile superposée avec des informations d'environnement.

5. Procédé de mise à disposition définie par l'utilisateur d'un véhicule selon l'une des revendications 1 à 4, **caractérisé en ce qu'**au moins la trajectoire (24) est communiquée à un utilisateur supplémentaire et l'utilisateur supplémentaire définit le lieu de remise (D).

6. Système pour un véhicule, possédant au moins :
- des moyens de communication avec des appareils externes au véhicule ;
- des actionneurs (44) destinés à actionner automatiquement des organes de commande du véhicule ;
- un système de détection destiné à acquérir des informations d'environnement et de véhicule (50) ;
- un système de commande et de régulation (56) destiné à mémoriser et à traiter des informations de communication, de véhicule et d'environnement ainsi qu'à générer des signaux de commande pour les actionneurs (44), **caractérisé en ce que** le système est conçu pour mettre en oeuvre un procédé selon l'une des revendications 1 à 5.

7. Véhicule automobile (14) qui possède un système selon la revendication 6.
